# EUROPEAN PATENT APPLICATION

(11) **EP 2 460 856 A1**
(43) Date of publication of application: **06.06.2012**
(21) Application number: 10804265.6
(22) Date of filing: 15.07.2010
(51) Int. Cl.: C08L 69/00, C08G 64/06, C08K 5/524, C08K 5/53

(54) **POLYCARBONATE RESIN COMPOSITION**

(30) Priority: 27.07.2009 JP 2009174624
(71) Applicant: Idemitsu Kosan Co., Ltd., Chiyoda-ku Tokyo 100-8321 (JP)
(72) Inventor: ISHIKAWA, Yasuhiro, Ichihara-shi Chiba 299-0193 (JP)
(74) Representative: Gille Hrabal
(86) International application number: PCT/JP2010/061950
(87) International publication number: WO 2011/013519

(57) **Abstract**

Disclosed is a polycarbonate resin composition composed of a mixture of (A) 100 parts by mass of a polycarbonate copolymer having a specific constitutional unit and (B) 0.01 to 1 part by mass of a phosphite antioxidant and/or a phosphonite antioxidant. The polycarbonate resin composition is excellent in heat resistance as well as thermal stability.

## Description

### [TECHNICAL FIELD]

The present invention relates to a polycarbonate resin composition, more particularly to a polycarbonate resin composition excellent in heat resistance and thermal stability.

### [BACKGROUND ART]

A polycarbonate resin produced from bisphenol A and has been used in a wide range of application of its excellent transparency, heat resistance, mechanical etc. On the other hand, since further improvement of the performance has been required on its use, various polycarbonate resins have been so far seeking for improvement of the performance.

Patent Document 1, for example, discloses a polycarbonate copolymer using 3,3,5-trimethylcyclohexyl as a technology to further improve heat resistance. However, this copolymer has unsatisfactory fluidity and thermal stability, problems of appearance often occur due to coloration, etc. caused by thermal hysteresis during molding which is performed at relatively high temperature.
Patent Document 2 discloses a thermally resistant binder resin for printing ink, in which a polycarbonate resin using 1,1-bis-(4-hydroxyphenyl)cyclododecane is used as the relevant resin. However, since thermal stability is not usually required for the polycarbonate resin in this application, in fact there is no description on the thermal stability in Patent Document 2.
Similarly, Patent Documents 3 to 7 disclose polycarbonate resins using monomers haying a cyclododecane structure. However, none of them was examined as a resin composition for use under high temperature and the thermal stability of these resin compositions is not sufficient.

### [Citation list]

### [Patent literature]

[Patent document 1] JP 02-88634 A
[Patent document 2] JP 2008-63501 A
[Patent document 3] JP 02-254462 A
[Patent document 4] JP 59-166528 A
[Patent document 5] JP 01-151574 A
[Patent document 6] JP 63-156823 A
[Patent document 7] JP 63-108025 A

### [DESCLOSURE OF THE INVENTION]

### [Problem to be solved by the invention]

The present invention has been attained with the view of the above-mentioned circumstances and aims at providing a polycarbonate resin composition excellent in heat resistance as well as thermal stability

### [Means for solving the problem]

As a result of a keen investigation, the present inventors have found that the above-mentioned problem could be solved by a polycarbonate resin composition composed of a mixture of a polycarbonate copolymer having a specific constitutional unit and a specific antioxidant. The present invention has been completed based on this finding.

Thus, according to the present invention, there is provided:
1. A polycarbonate resin composition, comprising;
   (A) 100 parts by mass of a copolymer having a constitutional unit represented by the following general formula (I) and a constitutional unit represented by the following general formula (II): and
   (B) 0.01 to 1 part by mass of a phosphite antioxidant and/or a phosphonite antioxidant,

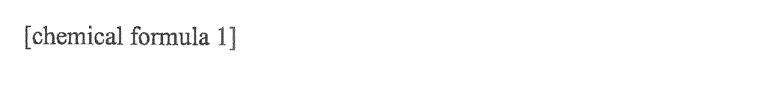

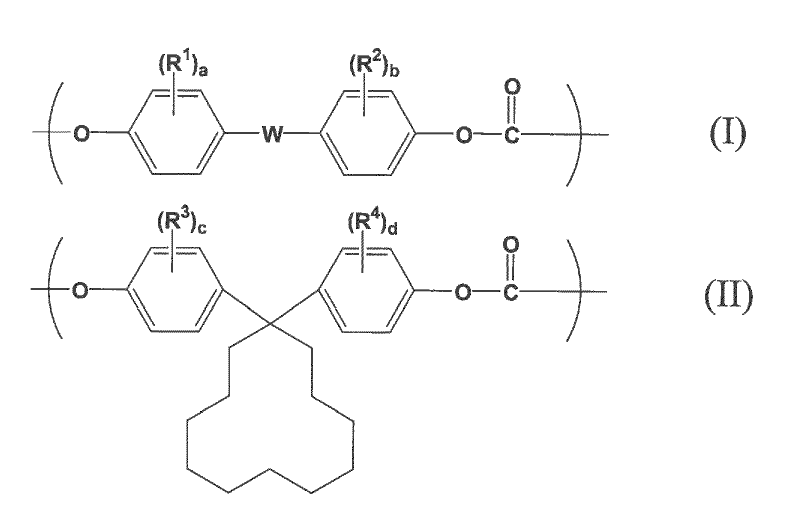

[wherein R¹, R², and R⁴ each independently indicate an alkyl group or an alkoxy group of C1 to C6, symbols a through d indicate an integer of 0 to 4, and W indicates a single bond, an alkylene group of C1 to C8, an alkylidene group of C2 to C8, a cycloalkylene group of C5 to C15, a cycloalkylidene group of C5 to C10, -S-, -SO-, -SO₂-, -O- or -CO-],
2. the polycarbonate resin composition according to the item 1, wherein the (B) component is an antioxidant selected from the following b1 to b4:
   b1: (2,6-di-t-butyl-4-metbylphenyl)pentaerytb-ritol diphosphite
   b2: tris(2,4-di-t-butylphenyl)phosphite,
   b3: tetrakis(2,4-di-t-butylphenyl)4,4'-biphenylene diphosphonite,
   b4: tetrakis(2,4-di-t-butyl-5-methylpbenyl)4,4'-biphenylene diphosphonite, and
3. A polycarbonate resin composition, comprising;
   (A) 100 parts by mass of a resin component composed of a polycarbonate copolymer (a1) having a constitutional unit represented by the following general formula (I) and a constitutional unit represented by the following general formula (II) and a polycarbonate polymer (a2) other than the polycarbonate copolymer (a1): and
   (B) 0.01 to 1 part by mass of a phosphite antioxidant and/or a phosphonite antioxidant,

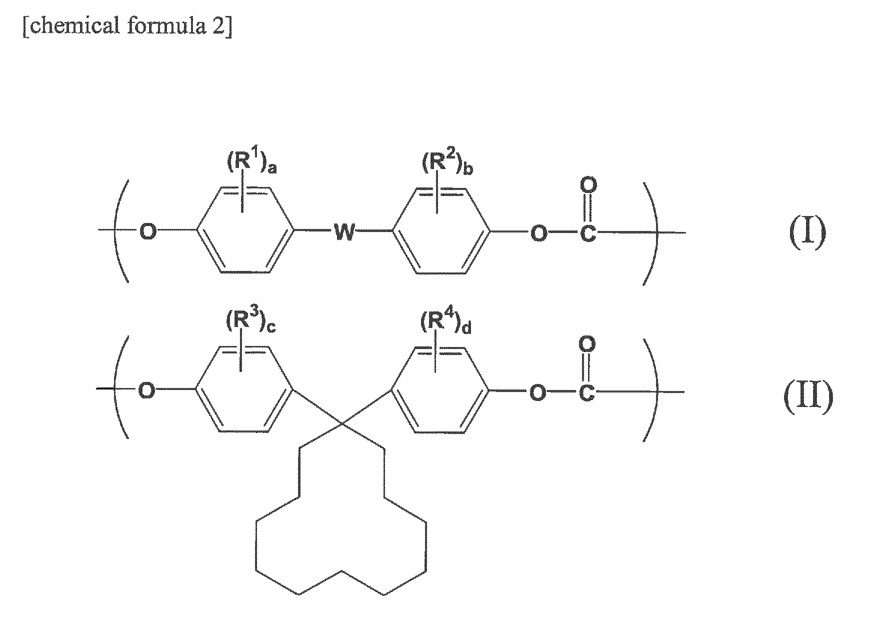

[wherein R¹, R², R³ and R⁴ each independently indicate an alkyl group or an alkoxy group of C1 to C6, symbols a through d indicate an integer of 0 to 4, and W indicates a single bond, an alkylene group of C1 to C8, an alkylidene group of C2 to C8, a cycloalkylene group of C5 to C15, a cycloalkylidene group of C5 to C10, -S-, -SO-, -SO₂-, -O- or -CO-].

### [Effects of the invention]

According to the present invention, a polycarbonate resin composition excellent in heat resistance and thermal stability is provided.

### [BEST MODE FOR CARRYING OUT THE INVENTION]

The polycarbonate resin composition of the present invention is a polycarbonate resin composition composed of a mixture of (A) a polycarbonate copolymer having a specific constitutional and (B) a specific of specific antioxidant.

In the present invention, a polycarbonate copolymer having a constitutional unit represented by the following general formula (I) and a constitutional unit represented by the following general formula (II) are used as (A) component.

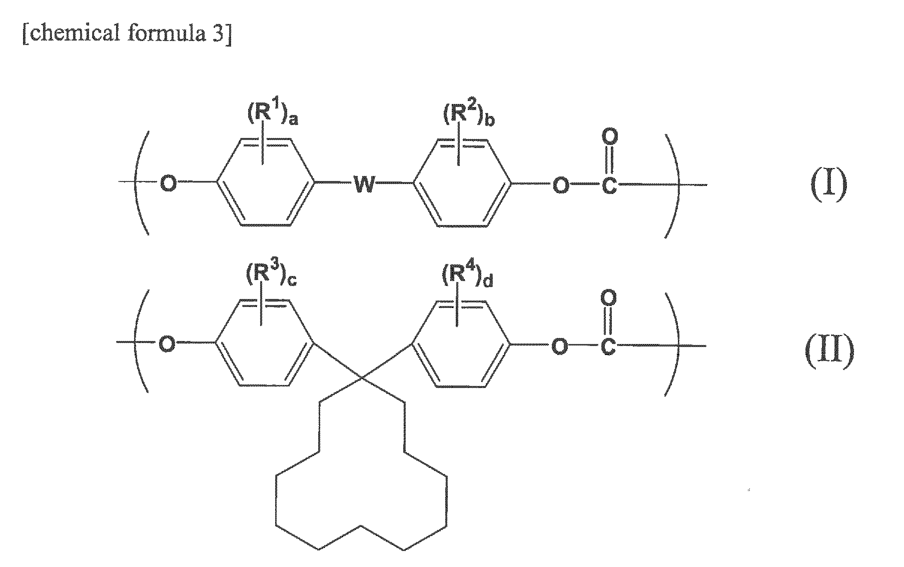

In the general formula (I) and (II), R¹, R², R³ and R⁴ each independently indicate an alkyl group or an alkoxy group of C1 to C6. Symbols a through d indicate an integer of 0 to 4. W indicates a single bond, an alkylene group of C1 to C8, an alkylidene group of C2 to C8, a cycloalkylene group of C5 to C15, a cycloalkylidene group of C5 to C10, -S-, -SO-, -SO₂-, -O- or -CO-.

Alkyl groups of C1 to C6 and alkyl groups in the alkoxy group of C1 to C6 represented by R¹ to R⁴ include, for example, methyl, ethyl, n-propyl, isopropyl, n-butyl, tert-butyl, tert-arnyl, n-hexyl, etc.
Alkylene groups of C1 to C8 represented by W include, for example, methylene, ethylene, propylene, etc. Alkylidene groups of C2 to C8 represented by W include, for example, ethylidene, propylidene, etc. Cycloalkylene groups of C5 to C15 represented by W include, for example, cyclopentyl, cyclohexyl, etc. Cycloalkylidene groups of C5 to C10 represented by W include, for example, cyclopentylidene, cyclohexylidene, etc.

The polycarbonate copolymer usually contain 90 mol% or less, preferably 5 to 60 mol%, of the constitutional unit represented by the general formula (II) based on the total constitutional unit. Heat resistance is improved by having the constitutional unit represented by the general formula (II). Although the resin viscosity tends to increase by containing many constitutional units represented by the general formula (II), molding can be carried out without problems if the content is 90 mol% or less,
Viscosity-average molecular weight of the polycarbonate copolymer is usually 13,000 to 26,000. In this range, the problem of difficulty of molding by thermal plasticity and the problem of the strength of the molded articles are eliminated. From this standpoint, the preferred molecular weight is 14,000 to 23,000, more preferably 15,000 to 22,000.

The polycarbonate copolymer can be obtained by copolymerizing a divalent phenol compound represented by the following general formula (III) and a divalent phenol compound represented by the general formula (IV) using phosgene, carbonate ester, or chloroformate.

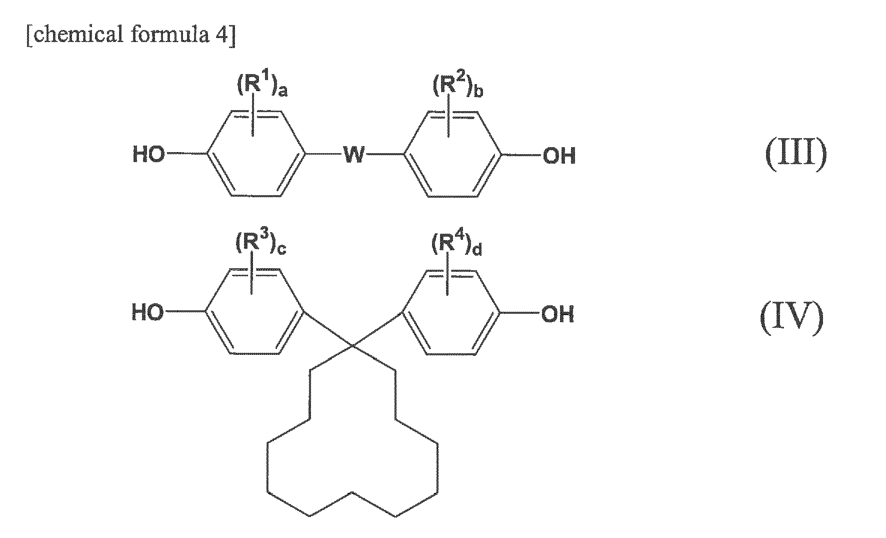

In the general formula (III) and (IV), R¹, R², R³, R⁴, symbols a through d and W indicate the same as described in the general formula (I) and (II).

Specific examples of the divalent phenol compound represented by the general formula (III) include, for example, 2,2-bis(4-hydroxyphenyl)propane [common name: bisphenol A], as a preferred one. Bisphenol compounds other than bisphenol A include, for example, bis(hydroxyaryl)alkanes such as bis(4-hydroxyphenyl)methane, 1,1-bis(4-hydroxyphenyl)ethane, 2,2-bis(4-hydroxyphenyl)butane, 2,2-bis(4-hydroxyphenyl)octane, bis(4-hydroxyphenyl)phenyhnethane, bis(4-hydroxyphenyl)diphenylmethane, 2,2-bis(4-hydroxy-3-methylphenyl)propane, bis(4-hydroxyphenyl)naphthylmethane, 1,1-bis(4-hydroxy-t-butylphenyl)propane, 2,2-bis(4-hydroxy-3-bromophenyl)propane, 2,2-bis(4-hydroxy-3,5-dimethylphenyl)propane, 2,2-bis(4-hydroxy-3-chlorophenyl)propane, 2,2-bis(4-hydroxy-3,5-dichlorophenyl)propane and 2,2-bis(4-hydroxy-3,5-dibromophenyl)propane; bis(hydroxyaryl)cycloalkanes such as 1,1-bis(4-hydroxyphenyl)cyclopentane, 1,1-bis(4-hydroxyphenyl)cyclohexane, 1,1-bis(4-hydroxyphenyl)-3,5,5-trimethylcydohexane and 2,2'-bis(4-hydroxyphenyl)norbomene; dihydroxyaryl ethers such as 4,4'-dihydroxyphenyl ether and 4,4'-dihydroxy-3,3'-dimethylphenyl ether; dihydroxydiaryl sulfides such as 4,4°-dihydroxydiphenyl sulfide and 4,4'-dihydroxy-3,3'-dimethyldiphenyl sulfide; dihydroxydiaryl sulfoxides such us 4,4'-dihydroxydiphenyl sulfoxide and 4,4'-dihydroxy-3,3'-dimethyldiphenyl sulfoxide; dihydroxydiaryl sulfones such as 4,4'-dihydroxydiphenyl sulfone and 4,4'-dihydroxy-3,3'-dimethyldiphenyl sulfone; dihydroxydiphenyls such as 4,4'-dihydroxydiphenyl; dihydroxydiaryl fluorenes such as 9,9-bis(4-hydroxyphenyl)fluorene and 9,9-bis(4-hydroxy-3-methylphenyl)fluorene; bis(4-hydroxyphenyl)diphenylmethane; dihydroxydiaryl adamantanes such as 1,3-bis(4-hydroxyphenyl)adamanta,ne, 2,2-bis(4-hydroxyphenyl)adamantane and 1,3-bis(4-hydroxyphenyl)-5,7-dimethyladamantane; bis(4-hydroxyphenyl)diphenylmethane; 4,4'-[1,3-phenylenebis(1-methylethylidene)]bisphenol; 10,10-bis(4-hydroxyphenyl)-9-anthrone; 1,5-bis(4-hydroxyphenylthio)-2,3-dioxapentaene, etc. These divalent phenol compounds may be used each alone or in a mixture of two or more kinds.

Specific examples of the divalent phenol represented by the general formula (IV) include, for example, 1,1-bis(4-hydroxyphenyl)cyclododecane, 1,1-bis(2-methyl-4-hydroxyphenyl)cyclododecane, etc. These divalent phenol compounds may be used each alone or in a mixture of two or more kinds.

The divalent phenol compounds represented by the general formula (IV) contain preferably 10 ppm or less of sulfur and 10 ppm or less of iron. In this range, a polycarbonate copolymer and a polycarbonate resin composition which are excellent in thermal stability can be obtained.

For the polycarbonate resin composition of the present invention, a phosphite antioxidant a phosphonite antioxidant is used as (B) component. Specific examples oaf these antioxidants for example, a phosphite antioxidant such as triphenyl phosphite, tris(4-methylphenyl)phosphite, tris(4-t-butylphenyl)phosphite, tris(monononylphenyl)phosphite, tris(2-methyl-4-ethylphenyl)phosphite, tris(2-methyl-4-t-butylphenyl)phosphite, tris(2,4-di-t-butylphenyl)phosphite, tris(2,6-di-t-butylphenyl)phosphite, tris(2,4-di-t-butyl-5-methylphenyl)phosphite, tris(mono, dinonylphenyl)phosphite, bis(monononylphenyl)pentaerythritol diphosphite, bis(2,4-di-t-butylphenyl)pentaerythfitol diphosphite, bis(2,6-di-t-butyl-4-methylphenyl)pentaerythritol diphosphite, bis(2,4,6-tri-t-butylphenyl)pentaerythritol diphosphite, bis(2,4-di-t-butyl-5-methylphenyl)pentaerythritol diphosphite, (2,6-di-t-butyl-4-methylphenyl)pentaerythritol diphosphite, 2,2-methylenebis(4,6-dimethylphenyl)octylphosphite, 2,2-methylenebis(4-t-butyl-6-methylphenyl)octylphosphite, 2,2-methylenebis(4,6-di-t-butylphenyl)octylphosphite, 2,2-methylenebis(4,6-dimethylphenyl)hexylphosphite, 2,2-methylenebis(4,6-di-t-butylphenyl)hexylphosphite, and 2,2-methylenebis(4,6-di-t-butylphenyl)stewylphosphite and a phophonite antioxidant such as tetrakis(2,4-di-t-butylphenyl)4,4'-biphenylenediphosphonite and tetrakis(2,4-di-t-butyl-5-methylphenyl)4,4'-biphenylenediphosphonite.
These antioxidants may be used alone or in combination of two or more kinds.

Among these antioxidants, (2,6-di-t-butyl-4-methylphenyl)pentaerythritol diphosphite, tris(2,4-di-t-butylphenyl)phosphite, tetrakis(2,4-di-t-butylphenyl)4,4'-biphenylene diphosphonite and tetrakis(2,4-di-t-butyl-5-methylphenyl)4,4'-biphenylene diphosphonite are preferred because of their excellent effect to prevent yellowing.

In the polycarbonate resin composition of the present invention, the amount of the (B) component is 0.01 to 1 part by mass relative to 100 parts by mass of the (A) component, When the amount of (B) component is in the above range, sufficient preventin-e effect against yellowing is attained. From this standpoint, the amount of (B) component is preferably 0.01 to 0.3 parts by mass, more preferably 0.01 to 0.1 part by ass.

In the polycarbonate resin composition of the present invention, other polycarbonate polymers may be used in addition to the polycarbonate copolymer the constitutional unit represented by the general formula (I) and the constitutional unit represented by the general formula (II). As used herein, the polycarbonate copolymer the constitutional unit represented by the general formula (I) and the constitutional unit represented by the general formula (II) may be to as polycarbonate copolymer (a1). The polycarbonate polymer other than the polycarbonate copolymer (a1) may be referred to as polycarbonate polymer (a2).
In this case, the amount of (B) component is 0.01 to 1 part by mass relative to 100 parts by mass of the total of the polycarbonate copolymer (a1) and the polycarbonate polymer (a2), preferable 0.01 to 0.3 parts by mass, more preferably 0.01 to 0.1 part by mass.

Examples of the polycarbonate polymer (a2) include, for example, an aromatic polycarbonate polymer.
The aromatic polycarbonate polymer to be used is obtained by conventional methods to produce an aromatic polycarbonate polymer, such as the interface polymerization method in which a divalent phenol compound and are reacted in the presence of an inactive organic solvent and an aqueous alkaline solution followed by polymerization through addition of a polymerization catalyst such as a tertiary amine or a quaternary ammonium salt and the pyridine method in which a divalent phenol compound is dissolved in pyridine or a mixed solution of pyridine and an inactive organic solvent followed by introduction of phosgene to directly produce the polycarbonate. For the above-mentioned reaction, terminators, molecular weight regulators, branching agents, etc. may be used as needed.

Examples of the divalent phenol compound used to produce the aromatic polycarbonate polymer include 2,2-bis(4-hydroxyphenyl)propane [=bisphenol A]; bis(hydroxyaryl)alkanes such as bis(4-hydroxyphenyl)methane, 1,1-bis(4-hydroxyphenyl)ethane, 2,2-bis(4-hydroxyphenyl)butane, 2,2-bis(4-hydroxyphenyl)octane, 2,2-bis(4-hydroxyphenyl)phenylmethane, 2,2-bis(4-hydroxy-3-methylphenyl)propane, bis(4-hydroxyphenyl)naphthylmethane, 1,1-bis(4-hydroxy-t-butylphenyl)propane, 2,2-bis(4-hydroxy-3-bromophenyl)propane, 2,2-bis(4-hydroxy-3,5-dimethylphenyl)propane, 2,2-bis(4-hydroxy-3-chlorophenyl)propane, 2,2-bis(4-hydroxy-3,5-dichlorophenyl)propane and 2,2-bis(4-hydroxy-3,5-dibromophenyl)propane; bis(hydroxyaryl)cycloalkanes such us 1,1-bis(4-hydroxyphenyl)cyclopentane, 1,1-bis(4-hydroxyphenyl)cyclohexane, 1,1-bis(4-hydroxyphenyl)-3,5,5-trimethylcyclohexane and 2,2'-bis(4-hydroxyphenyl)norbornene; dihydroxyaryl ethers such as 4,4'-dihydroxyphenyl ether and 4,4'-dihydroxy-3,3'-dimethylphenyl ether; dihydroxydiaryl sulfides such as 4,4-dihydroxydiphenyl sulfide and 4,4'-dihydroxy-3,3'-dimethyldiphenyl sulfide; dihydroxydiaryl sulfoxides such as 4,4'-dihydroxydiphenyl sulfoxide and 4,4'-dihydroxy-3,3'-dimethyldiphenyl sulfoxide; dihydroxydiaryl sulfones such as 4,4'-dihydroxydiphenyl sulfone and 4,4'-dihydroxy-3,3'-dithethyldiphenyl sulfone; dihydroxydiphenyls such as 4,4'-dihydroxydiphenyl; dihydroxydiaryl fluorenes such as 9,9-bis(4-hydroxyphenyl)fluorene and 9,9-bis(4-hydroxy-3-methylphenyl)fluorene; bis(4-hydroxyphenyl)diphenylmethane; dihydroxydiaryl adamantanes such as 1,3-bis(4-hydroxyphenyl)adamantane, 2,2-bis(4-hydroxyphenyl)adamantane and 1,3-bis(4-hydroxyphenyl)-5,7-dimethyladamantane; bis(4-hydroxyphenyl)diphenylmethane; 4,4'-[1,3-phenylenebis(1-methylethylidene)]bisphonol; 10,10-bis(4-hydroxyphenyl)-9-anthrone; 1,5-bis(4-hydroxyphenylthio)-2,3-dioxapentaene, etc. These divalent phenol compounds may be used each alone or in a mixture of two or more kinds.

To produce the aromatic polycarbonate polymer, terminators or molecular weight regulators are usually used. Various kinds of molecular weight regulators may be used so long as they are usually used for production of the polycarbonate polymer. Specifically, examples of the monovalent phenol compound include, for example, phenol, o-n-butylphenol, m-n-butylphenol, p-n-butylphenol, o-isobutylphenol, m-isobutylphenol, p-isobutylphenol, o-t-butylphenol, m-t-butylphenol, p-t-butylphenol, o-n-pentylphenol, m-n-pentylphenol, p-n-pentylphenol, o-n-hexylphenol, m-n-hexylphenol, p-n-hexylphenol, p-t-octylphenol, o-cyclohexylphenol, m-cyclohexylphenol, p-cyclohexylphenol, o-phenylphenol, m-phenylphenol, p-phenylphenol, o-n-nonylphenol, m-n-nonylphenol, p-n-nonylphenol, o-cumylphenol, m-cumylphonol, p-cumylphenol, o-naphthylphenol, m-naphthylphenol, p-naphthylphenol, 2,5-di-t-butylphenol, 2,4-di-t-butylphenol, 3,5-di-t-butylphenol, 2,5-dicumylphenol, 3,5-dicumylphenol, p-cresol, bromophenol, tribromophenol, monoalkylphenol having a linear or branched alkyl group with average carbon number of 12 to 35 at ortho, meta or para position, 9-(4-hydroxyphenyl)-9-(4-methoxyphenyl)fluorene, 9-(4-hydroxy-3-methylphenyl)-9-(4-methoxy-3-methylphenyl)fluorene, 4-(1-adamantyl)phenol, etc. Among these monovalent phenol compounds, p-t-butylphenol, p-cumylphenol, p-phenylphenol, etc. are preferably used,
These monovalent phenol compounds may be used each alone or in a mixture of two or more kinds.

To produce the aromatic polycarbonate polymer, branching agents may be additionally used. As a branching agent, a compound having three or more functional groups, such as 1,1,1-tris(4-hydroxyphenyl)ethane, 4,4'-[-[4-[1-(4-hydroxyphenyl)-1-methylethyl]phenyl]ethylidene]bisphenol, α,α',α"-tris(4-hydroxyphenyl)-1,3,5-triisopropylbenzene, 1-[α-methyl-α-(4'-hydroxyphenyl)ethyl]-4-[α',α'-bis(4"-hydroxyphenyl)ethyl]benzene, phloroglucin, trimellitic acid, isatinbis(o-cresol), etc. may be used. These branching agents may be used each alone or in a mixture of two or more kinds.
The branching agent may be used usually in a range of 0.01 to 3 mol%, preferably 0.1 to 1.0 mol%, relative to the above-mentioned divalent phenol compound.

To the polycarbonate resin composition of the present invention, known additives other than the above-mentioned (A) component and (B) component may be added. Examples of such additives include hindered phenol antioxidants, UV absorbers, antistatic agents, lubricants, fire retardants, fillers, dyes, pigments, impact resistance modifiers, etc.

### [Examples]

The present invention will be further described in more detail by examples, although the present invention is in no way limited by these examples.

### Production Example 1 [production of polycarbonate oligomer]

To an aqueous solution of 5.6 mass% of sodium hydroxide was added 2000 ppm of sodium dithionite relative to bisphenol A (BPA) which was dissolved later. To this solution was dissolved BPA so as to make the concentration of BPA of 13.5 mass% to prepare a sodium hydroxide aqueous solution of BPA. The sodium hydroxide aqueous solution of BPA, methylene chloride and phosgene were passed continuously through a tubular reactor with an inner diameter of 6 mm and a tube length of 30 m at a flow rate of 40 L/hr, 15 L/hr and 4.0 kg/hr, respectively. The tubular reactor had a jacket portion, through which cooling water was passed to keep the temperature of the reaction fluid not higher than 40°C. The reactant fluid leaning the tubular reactor was continuously introduced to a baffled tank reactor with an inner volume of 40 L and equipped with a backswept wing, into which the sodium hydroxide aqueous solution of BPA, 25 mass% sodium hydroxide aqueous solution, water and 1 mass% triethylamine aqueous solution were added at a flow rate of 2.8 L/hr, 0.07 L/hr, 17 L/hr and 0.64 L/hr, respectively, to carry out the reaction. The reactant fluid flowing out of the tank reactor was continuously taken out and allowed to separate and remove the aqueous phase to collect the methylene chloride phase.
The concentration of the polycarbonate oligomer thus obtained and the concentration of the chloroformate substrate was 329 g/L and 0.74 mol/L, respectively.

### Production Example 2 [Production of polycarbonate copolymer (A-1)]

A 50 L tank reactor equipped with a baffle plate, a paddle type impeller and a cooling jacket was charged with 7,5 L of the polycarbonate oligomer solution obtained in Production Example 1, 18 L of methylene chloride and 70.8 g of p-t-butylphenol (PTBP) and PTBP were dissolved by stirring.
To this solution, 2.6 mL of triethylamine was added under stirring. Then a sodium hydroxide aqueous solution of 1,1-bis(4-hydroxyphenyl)cyclododecane (prepared by dissolving 897 g of 1,1-bis(4-hydroxyphenyl)cyclododecane in an aqueous solution prepared by dissolving 680 g of NaOH and 1.8 g of sodium dithionite in 9.9 L of water) was added thereto and the polymerization reaction was carried out for 60 min.
After adding 10 L of methylene chloride for dilution and stirring for 10 min, the mixture was separated into an organic phase containing the polycarbonate copolymer and an aqueous phase containing the excess BPA and NaOH, and the organic phase was isolated. The methylene chloride solution of the polycarbonate copolymer obtained was washed twice with 0.3 mol/L NaOH aqueous solution (15 vol% based on the solution) and once with 0.2 mol/L hydrochloric acid sequentially, and then washed repeatedly with pure water until the electric conductivity of the aqueous phase after washing became 0.01 µS/m or less.
The methylene chloride solution of the polycarbonate copolymer obtained by washing was concentrated and pulverized. The flakes obtained were dried at 120°C in vacuo to obtain the polycarbonate copolymer (A-1).
The amount of 1,1-bis(4-hydroxyphenyl)cyclododecane (BisP-CDE) residue determined by NMR was 20.4 mol%, the viscosity number measured according to ISO 1628-4(1999) was 41.6, the viscosity average molecular weight Mv=14,900, and the glass transition temperature was 165°C.

### Production Example 3 [Production of polycarbonate copolymer (A-2)]

The procedure similar to Production Example 2 was performed except that the amount of PTBP added was 54.6 g to obtain the polycarbonate copolymer (A-2). The amount of BisP-CDE residue determined by NMR was 20.7 mol%, the viscosity number was 47.1, the viscosity average molecular weight Mv=17,500, and the glass transition temperature was 170°C.

### Production Example 4 [Production of polycarbonate copolymer (A-3)]

The procedure similar to Production Example 2 was performed except that 897 g of 1,1-bis(4-hydroxyphenyl)cyclododecane was changed to 483 g of 1,1-bis(2-methyl-4-hydroxyphenyl)cyclododecane and 290 g of 2,2-bis(4-hydroxyphenyl)propane and that the amount of PTBP added was changed to 41.3 g to obtain the polycarbonate copolymer (A-3). The amount of 1,1-bis(2-methyl-4-hydroxyphenyl)cyclododecane residue determined by NMR was 10.2 mol%, the viscosity number was 53.2, the viscosity average molecular weight Mv=20,200, and the glass transition temperature was 162°C.

### Example 1-10, Comparative Example 1-3

The polycarbonate copolymers A-1 to A-3 produced in Production Examples 2 to 4 and commercial polycarbonate polymers were dry blended with various antioxidants in the compounding ratios shown in Table 1 and the pellets were obtained by granulation with a single axle granulator of 40 mm diameter with a vent at a resin temperature of 300°C.

**[Table 1]**

| | | | Example | | | | | | | | | | Comparative Example | | |
|---|---|---|---|---|---|---|---|---|---|---|---|---|---|---|---|
| | | | 1 | 2 | 3 | 4 | 5 | 6 | 7 | 8 | 9 | 10 | 1 | 2 | 3 |
| Resin component | (A) component | A-1 | 100 | - | - | 100 | 100 | 100 | 100 | 100 | - | - | 100 | 100 | 100 |
| | | A-2 | - | 100 | - | - | - | - | - | - | 70 | 70 | - | - | - |
| | | A-3 | - | - | 100 | - | - | - | - | - | - | - | - | - | - |
| | | PC1 | - | - | - | - | - | - | - | - | - | 30 | - | - | - |
| | | PC2 | - | - | - | - | - | - | - | - | 30 | - | - | - | - |
| Antioxidant | (B) component | Antioxidant 1 | 0.03 | 0.05 | - | - | - | - | - | - | 0.03 | - | - | - | - |
| | | Antioxidant 2 | - | - | 0.03 | - | - | - | - | - | - | 0.03 | - | - | - |
| | | Antioxidant 3 | - | - | - | 0.03 | - | - | - | - | - | - | - | - | - |
| | | Antioxidant 4 | - | - | - | - | 0.03 | - | - | - | - | - | - | - | - |
| | | Antioxidant 5 | - | - | - | - | - | 0.03 | - | - | - | - | - | - | - |
| | | antioxidant 6 | | | | | | | 0.03 | | | | | | |
| | | Antioxidant 7 | - | - | - | - | - | - | - | 0.03 | - | - | - | - | - |
| | | Antioxidant 8 | - | - | - | - | - | - | - | - | - | - | 0.03 | - | - |
| | | Antioxidant 9 | - | - | - | - | - | - | - | - | - | - | - | 0.03 | - |
| | | Antioxidant 10 | - | - | - | - | - | - | - | - | - | - | - | - | 0.03 |

| | | | | | | | | | | | | | | | |
|---|---|---|---|---|---|---|---|---|---|---|---|---|---|---|---|
| Numbers in Table 1 indicate part by mass. | | | | | | | | | | | | | | | |

PC1: TARFLON FN1700A (BPA polycarbonate with a viscosity number 47.5 and a viscosity average molecular weight of 17,700)
PC2: FN1500 (BPA polycarbonate with a viscosity number of 40.7 and a viscosity average molecular weight of 14,700)
Antioxidant 1: ADEKA stab PEP-36 (phosphite antioxidant produced by ADEKA, (2,6-di-t-butyl-4-methylphenyl)pentaerythritol diphosphite)
Antioxidant 2: ADEKA stab 2112 (phosphite antioxidant produced by ADEKA, tris(2,4-di-t-butylphenyl)phosphite)
Antioxidant 3: GSY-P101 (phosphonite antioxidant produced by Sakai Chemical Industry, Co., Ltd., tetrakis(2,4-di-t-butyl-5-methylphenyl)4,4'-biphenylene diphosphonite)
Antioxidant 4: P-EPQ (phosphonite antioxidant produced by Ciba Specialty Chemicals)
Antioxidant 5: ADEKA stab TPP (phosphite antioxidant produced by ADEKA, triphenyl phosphite)
Antioxidant 6: ADEKA stab C (phosphite antioxidant produced by ADEKA, diphenyloctyl phosphite)
Antioxidant 7: ADEKA stab HP-10 (phosphite antioxidant produced by ADEKA, 2,2-methylenebis(4,6-di-t-butylphenyl)octyl phosphite)
Antioxidant 8: ADEKA stab AO-60 (hindered phenol antioxidant produced by ADEKA)
Antioxidant 9: ADEKA stab AO-80 (hindered phenol antioxidant produced by ADEKA)
Antioxidant 10: ADEKA stab AO-23 (thioether antioxidant produced by ADEKA)

The pellets obtained were molded under the following conditions and were evaluated for thermal stability as a resin composition by measuring YI after molding, The evaluation results are shown in Table 2.

### [Experimental conditions]

Injection molding machine: EC 40N, Toshiba Machine Co., Lid.
Molding machine cylinder temperature: 300°C or 350°C
Holding time in cylinder: 8 mien
Molding code: 50 sec
Mold temperature: 80°C
Shape of the molded piece: plate of 35x25x2 mm
YI: Five molded pieces were taken after 13th injection molding shot and were measured for
YI by the transmission method using a spectrocolormeter Σ90 manufactured by Nippon Denshoku Industries Co., Ltd. with a measuring disk having a diameter of 30 mm and a C2 light source, The average values were calculated.

**[Table 2]**

| | | Example | | | | | | | | | | Comparative example | | |
|---|---|---|---|---|---|---|---|---|---|---|---|---|---|---|
| | | 1 | 2 | 3 | 4 | 5 | 6 | 7 | 8 | 9 | 10 | 1 | 2 | 3 |
| Heat Resistance | Tg (°C) | 165 | 170 | 162 | 165 | 165 | 165 | 165 | 165 | 160 | 164 | 166 | 170 | 165 |
| Color Evaluation | YI 300°C | 1.0 | 1.0 | 1.0 | 1.2 | 1.2 | 1.2 | 1.3 | 1.0 | 1.0 | 1.0 | 2.0 | 2.0 | 2.4 |
| | YI 350°C | 1.1 | 1.1 | 1.1 | 1.1 | 1.4 | 1.4 | 1.4 | 1.4 | 1.1 | 1.1 | 2.8 | 2.8 | - |

### [Industrial applicability]

The polycarbonate resin composition of the present invention is excellent in heat resistance and thermal stability and can be utilized as a raw material for various transparent forming materials and polymer alloy materials,

## Claims

1. A polycarbonate resin composition, comprising;
(A) 100 parts by mass of a polycarbonate copolymer having a constitutional unit represented by the following general formula (I) and a constitutional unit represented by the following general formula (II): and
(B) 0.01 to 1 part by mass of a phosphite antioxidant and/or a phosphonite antioxidant, 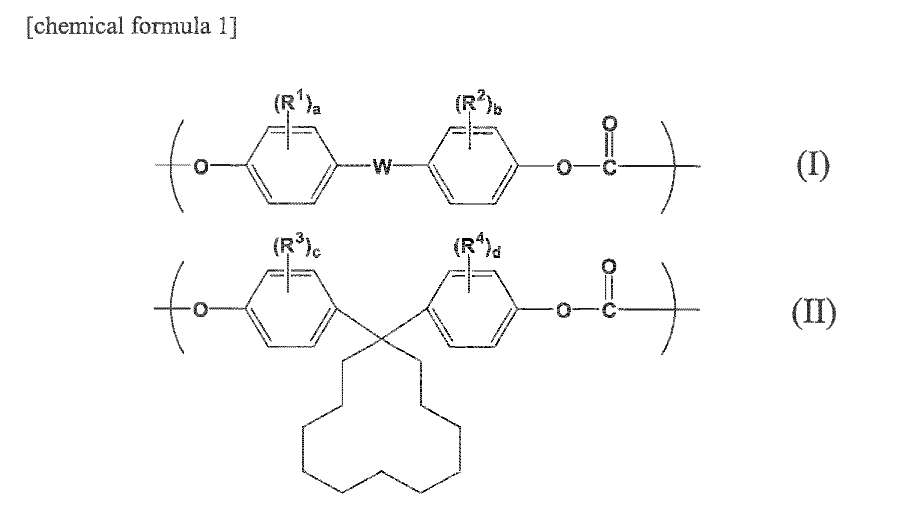 [wherein R¹, R², R³ and R⁴ each independently indicate an alkyl group or an alkoxy group of C1 to C6, symbols a through d indicate an integer of 0 to 4, and W indicates a single bond, an alkylene group of C1 to C8, an alkylidene group of C2 to C8, a cycloalkylene group of C5 to C15, a cycloalkylidene group of C5 to C10, -S-, -SO-, -SO₂-, -O- or -CO-].

2. The polycarbonate resin composition according to in claim. 1, wherein the (B) component is an antioxidant selected from the following b1 to b4:
b1: (2,6-di-t-butyl-4-methylphenyl)pentaerythritol diphosphite,
b2: tris(2,4-di-t-butylphenyl)phosphate,
b3: tetrakis(2,4-di-t-butylphenyl)4,4'-biphenylene diphosphonite, and
b4: tetrakis(2,4-di-t-butyl-5-methylphenyl)4,4'-biphenylene diphosphonite.

3. A polycarbonate resin composition, comprising;
(A) 100 by mass of a resin component composed of a polycarbonate copolymer (a1) having a constitutional unit represented by the following general formula (I) and a constitutional unit represented by the following general formula (II) and a polycarbonate polymer (a2) other than the polycarbonate copolymer (a1): and
(B) 0.01 to 1 part by mass of a phosphite antioxidant and/or a phosphonite antioxidant, 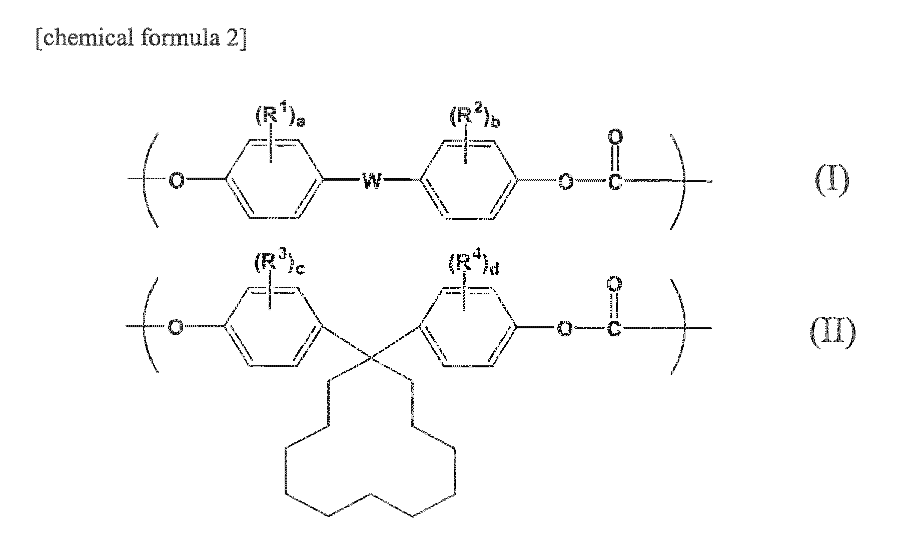
[wherein R¹, R², R³ and R⁴ each independently indicate an alkyl group or an alkoxy group of C1 to C6, symbols a through d indicate an integer of 0 to 4, and W indicates a single bond, an alkylene group of C1 to C8, an alkylidene group of C2 to C8, a cycloalkylene group of C5 to C15, a cycloalkylidene group of C5 to C10, -S-, -SO-, -SO₂-, -o- or -CO-].
